# EUROPEAN PATENT APPLICATION

(11) **EP 2 354 871 A2**
(43) Date of publication of application: **10.08.2011**
(21) Application number: 11152523.4
(22) Date of filing: 28.01.2011
(51) Int. Cl.: G05B 19/18

(54) **Method of machining between contoured surfaces with cup shaped tool**

(30) Priority: 29.01.2010 US 696540
(71) Applicant: United Technologies Corporation, Hartford, CT 06101 (US)
(72) Inventor: Erickson, Robert E., Storrs, CT 06268 (US)
(74) Representative: Leckey, David Herbert

(57) **Abstract**

A method of machining a rotor disk (10) includes the step of detecting accessible contact areas on a rotor surface (16) and corresponding abrasive disk orientations at contact points within that contact area. The detected accessible area and orientations are then utilized to map a machining path and corresponding abrasive disk movements. Machine tool executable instructions are generated using the mapped machining path and corresponding abrasive disk movement for removing material on a rotor surface (16) between two airfoils (14).

## Description

### BACKGROUND

This disclosure generally relates to a method of machining between contoured surfaces. More particularly, this disclosure relates to a method of machining a rotor disk surface between turbine blades.

A turbine includes a plurality of airfoils affixed or integrally formed as part of a rotor. Each airfoil includes a contoured shape. An integrally bladed rotor (IBR) includes airfoils disposed about an outer perimeter of the rotor. The rotor and blades are formed as one part. Therefore any finishing is performed on the rotor with the blades. A surface between the contoured blades is a challenging surface to machine. Accordingly, it is desirable to design and develop methods of machining this surface.

### SUMMARY

A disclosed method of machining a rotor disk includes the process steps of detecting accessible contact areas on a rotor surface and corresponding abrasive disk orientation at contact points within the contact area. The method utilizes the detected accessible area and orientations to map a machining path and corresponding abrasive disk movements. The mapped machining path and detected accessible area is then utilized to generate machine tool executable instructions for driving the abrasive disk during machining operations.

These and other features disclosed herein could be best understood from the following specification and drawings, the following of which is a brief description.

### BRIEF DESCRIPTION OF THE DRAWINGS

Figure 1 is a schematic view of an abrasive disk machining a surface of a rotor disk between airfoils.
Figure 2 is a cross-sectional view of an example abrasive disk.
Figure 3 is a schematic view of movement of an example abrasive disk about a roll axis.
Figure 4 is a schematic view of the example abrasive disk in contact with a surface of the rotor disk between airfoils.
Figure 5 is a schematic view of the example abrasive disk moved about a yaw axis.
Figure 6 is a schematic view of a range of points on a rotor surface between airfoils.
Figure 7 is a schematic view of an example machining path between airfoils.
Figure 8 is a schematic view of another example machining path between airfoils.
Figure 9 is a schematic representation of a computer system for generating machine tool executable instructions for machining a rotor surface.

### DETAILED DESCRIPTION

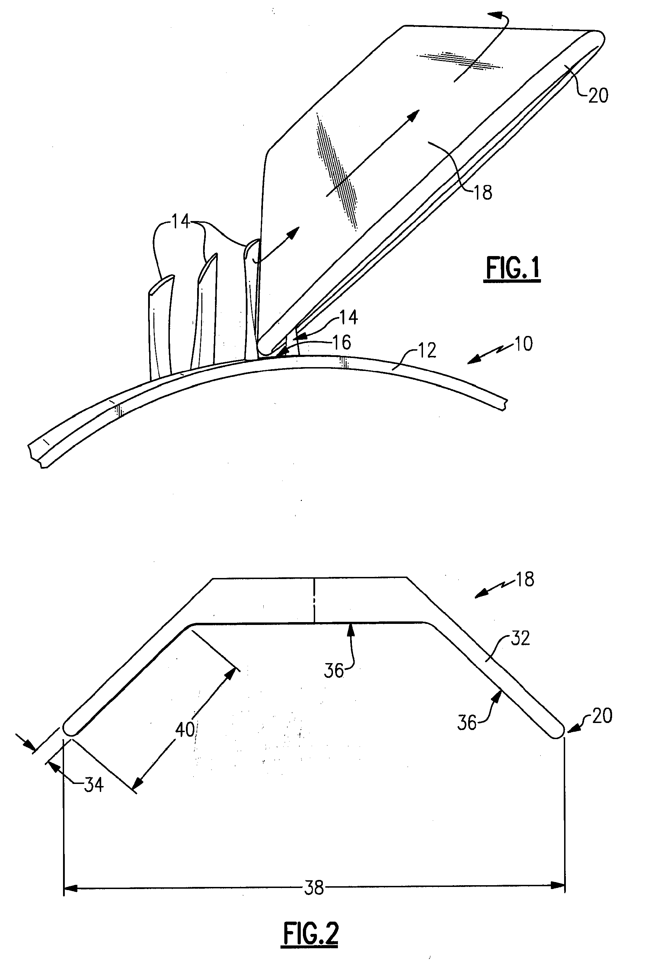

Referring to Figures 1 and 2, an integrated bladed rotor (IBR) 10 includes a plurality of integrally formed airfoils 14 that extend radial outward from a disk 12. The complex shape of the rotor 10 is finish machined with a grinding operation. The example grinding operation utilizes an abrasive disk 18 with a relatively large diameter 38 and a grinding surface 20 disposed at a tip of the disk wall 32. A rotor surface 16 between adjacent airfoils 14 is finish machined using the abrasive disk 12 to provide a desired surface finish and shape. This grinding operation is complicated by the close proximity to the adjacent airfoils 14.

The abrasive disk 18 includes a wall length 40 and thickness 34 that provide desired accessibility to the rotor surface 16 between the two airfoils 14. Moreover, an angle 36 between the center portion of the disk 18 and the walls 32 further provides desired accessibility to the rotor surface 16. The length 40 and angle 36 are provided dependent on a size and shape of the airfoils 14. Once the abrasive disk 18 configuration is determined, a further process and method is implemented for determining possible orientations of the abrasive disk 18 during the machining operation.

The example machining operation utilizes the rotating abrasive disk 18 that is moved between adjacent airfoils 14 to contact the rotor surface 16, but not contact the adjacent airfoils 14. Accordingly, the possible area on the rotor surface 16 that is accessible by the abrasive disk 18 is limited and is determined according to a disclosed example method.

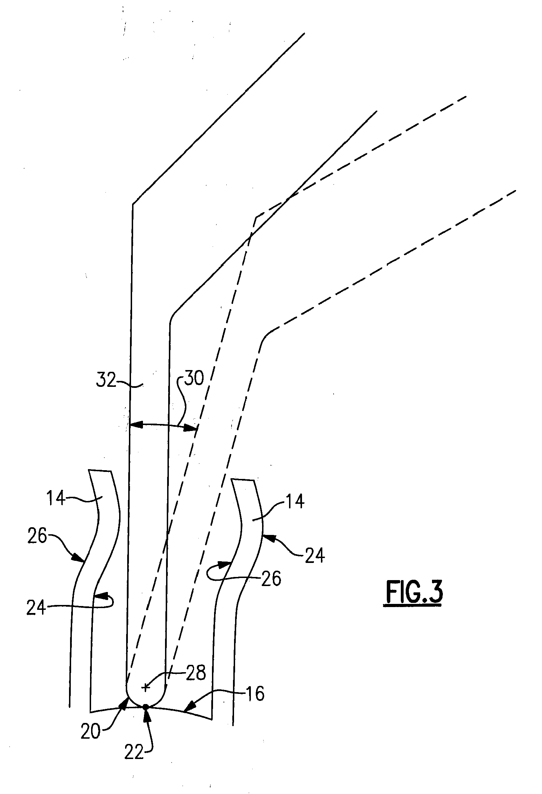

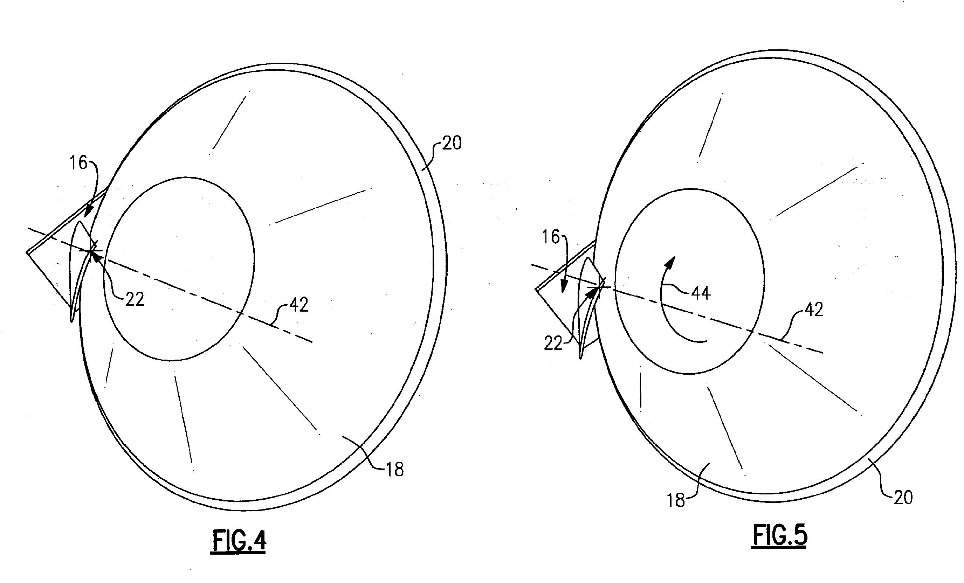

Referring to Figure 3, the abrasive disk 18 rotates during machining to provide the desired material removal and surface finish. Movement of the abrasive disk 18 between the airfoils 14 is possible about a roll axis 28 (Figure 3) and a yaw axis 42 (Figures 4 and 5). Movement about the roll axis 28 is schematically indicated at 30 and is limited by the position and height of the airfoils 14. Each of the airfoils 14 includes an inner contour 24 and an outer contour 26. The inner and outer contours 24 and 26 are formed and finished in a separate machining operation. Movement about the roll axis 28 comprises tilting of the abrasive disk 18 at an angle relative to normal about the roll axis 28. Movement of the abrasive disk 18 about the roll axis 28 while remaining in place at a contact point 22 is limited by adjacent airfoils 14.

Referring to Figures 4 and 5 with continued reference to Figure 2, the abrasive disk 18 is movable about the yaw axis 42 as indicated at 44 and comprises twisting of the abrasive disk 18 while maintaining point contact at the contact point 22. Movement about the yaw axis 42 is again limited by the adjacent airfoils 14. The yaw axis is defined as a line passing through the contact point where the cutter touches the part and normal to the part surface at that point.

The limits of movement of the abrasive disk 18 about the roll axis 28 and the yaw axis 42 provide a range of possible abrasive disk orientations that can be utilized during machining of the rotor surface 16. Determining the entire range of possible abrasive disk orientations for each point on the rotor surface 16 provides the information necessary to generate a machining path and instructions executable by a machine tool for maneuvering the abrasive disk 18 into the area between the airfoils 14.

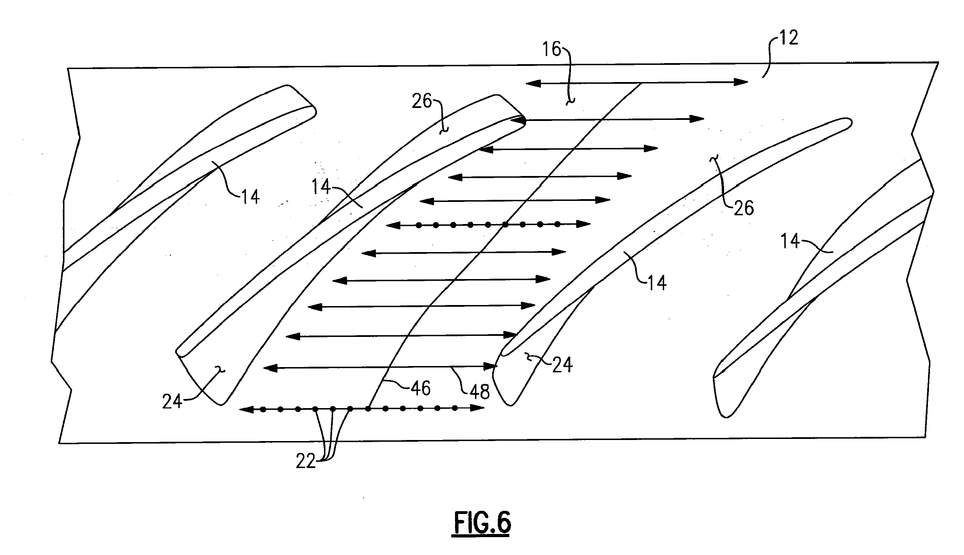

Referring to Figure 6, the accessible area is determined by detecting a range of acceptable orientations of the abrasive disk 18 at multiple contact points 22 along the rotor surface 16 between the airfoils 14. The acceptable orientations of the abrasive disk 18 include positions in which the abrasive disk 18 does not contact and/or is spaced apart from the nearest airfoil 14 by a desired clearance.

Detecting the accessible area and acceptable orientations of the abrasive disk 18 on the rotor surface 16 is performed by placing the abrasive disk 18 into contact or within a desired distance with the rotor surface 16 and incrementally moving the abrasive disk 18 about the roll axis 28 and the yaw axis 42. The incremental movement of the abrasive disk 18 results in the determination of outer boundaries of orientations of the abrasive disk 18 at a particular contact point 22. The abrasive disk 18 is then moved to a different contact point 22 and another range or incremental movements made until the outer boundaries of contact points with acceptable abrasive disk orientations are mapped.

Figure 6 illustrates an example pattern for the detecting process. A centerline 46 between the airfoils 14 along with lines 48 that are transverse to the centerline 48 illustrate the example pattern for detecting acceptable contact points and orientations of the abrasive disk 18. Along each of the transverse lines 48 are the contact points 22. At each of the contact points 22, the possible movement in each of the axis 28 and 42 is determined. At each contact point 22 the possible range of movement about the roll axis 28 is detected and recorded. Further, the possible range of movement about the yaw axis 42 is detected and recorded. That is, the abrasive disk 18 is rotated about each of the roll axis 28 and the yaw axis until further movement of the abrasive axis would result in less then a minimum allowable clearance with one of the airfoils 14. The range of movement in each of the axis 28, 42 is then utilized to determine if each contact point on rotor surface 16 is accessible.

The detection determination is repeated at successive contact points 22 that approach each airfoil 14. The number and location of contact points 22 is determined to provide a desired accuracy and precision. As detection is performed at contact points 22 closer to the each of the airfoils 14, the range of possible abrasive disk orientations becomes more and more limited.

The spacing of the contact points 22 is illustrated as being substantially uniform, however, the contact points 22 may be closer together as detection is performed at contact points 22 closer and closer to the each of the airfoils. The determinations made of abrasive disk 18 orientations at contact points 22 closer to each other provide an increased precision and range of acceptable disk 18 orientations. In other words, smaller increments are utilized to define acceptable orientations and contact points as the outer limits of abrasive disk position and orientation is approached.

Completion of the detection process produces a range of contact points 22 that can be reached and contacted by the abrasive disk 18 without contacting, or otherwise intruding on a minimal clearance with the airfoils 14. At each of the contact points 22 a range of acceptable abrasive disk orientations are determined that include acceptable roll and yaw combinations and are recorded. Information on the range of contact points and disk orientations possible at each point maps the overall acceptable range of movement for the abrasive disk 18 in machining the rotor surface 16.

A machining pattern is next determined utilizing the detected range of contact points and corresponding disk orientations. The initial step is to define a desired machining pattern.

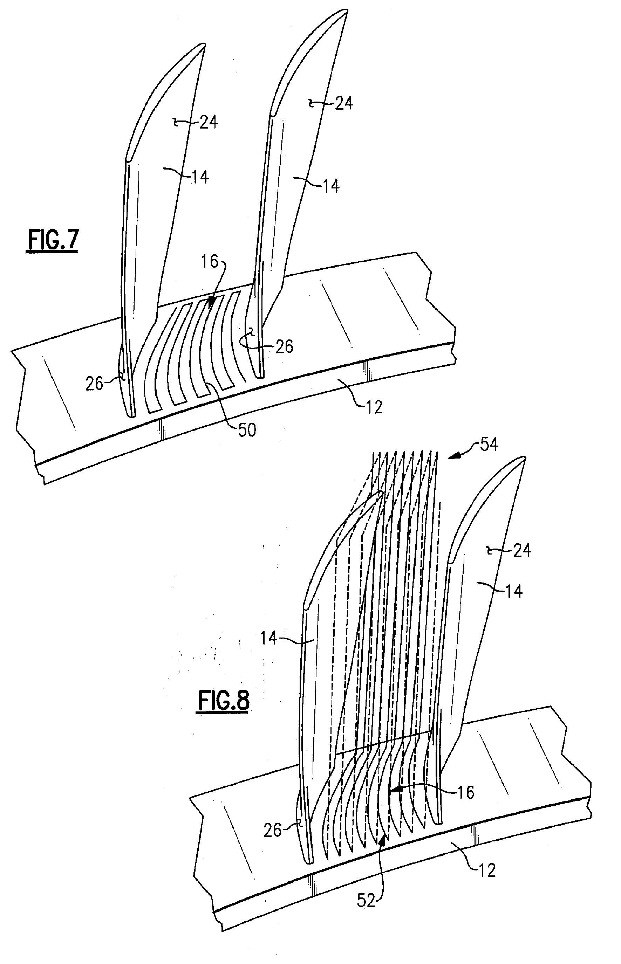

Referring to Figure 7, an example machining pattern 50 comprises a zig-zag pattern where the machining path is continuous between passes over the rotor surface 16. In the zig-zag pattern 50 each successive pass of the abrasive disk 18 is connected such that the abrasive disk 18 is placed in contact with the rotor surface only once and until such time as the entire surface of the rotor surface is machined.

Referring to Figure 8, another example machining pattern 52 is disclosed as a zag pattern and includes a plurality of successive machining passes that are each separate from the previous machining pass. The abrasive disk 18 is lifted from the rotor surface 16 after each pass started from one side of the rotor surface 16. Figures 7 and 8 are examples of possible machining patterns, and other patterns as are known could be utilized.

The information obtained during the detection process defines a mapped area relative to the rotor disk 10 in which the abrasive disk 18 could move without contacting the airfoils 14. The determination of the machining pattern utilizes this information to not only define the machining pattern but also approach paths and retraction paths of the abrasive disk 18.

The machining pattern is determined by selecting a desired pattern, such as the example zig-zag 50 or zag 52. Depending on the pattern selected, an initial contact point is determined for the machining path. From the initial contact point the middle and end points for each pass is determined in view of the detected range of disk orientations.

For each of the contact points 22 within the machining pattern, at least one abrasive disk orientation is determined. The acceptable abrasive disk orientation is determined by directly utilizing the detected data. Optionally, an acceptable disk orientation can be predicted utilizing the detected data, or a previously determined position. The prediction of the disk orientation can also be determined by interpolating a position from the orientation data and data corresponding to surrounding contact points.

For each contact point along the machining pattern the disk orientation is selected is that orientation including the roll position and the yaw position that is furthest from both of the airfoils 14. Each separate contact point is utilized to define the subsequent orientation of the abrasive disk 18 at the next contact point to avoid sudden orientation changes. In other words, although at each contact point there is one orientation that results in the most clearance from both of the airfoils, that maximum clearance orientation is considered in view of the preceding disk orientation at the proceeding contact point to avoid drastic orientation changes. Therefore, the maximum clearance orientation point may not be utilized for each contact point in order to define a smooth machining path of the abrasive disk 18. Such a smoothing of the position and orientation can be accomplished by numerical averages or other analysis techniques to smooth transition of the abrasive disk 18 along the machining path.

The machining path also necessarily includes approach and retraction paths of the abrasive disk 18. The approach and retraction paths are defined in view of the detected accessible area between the airfoils 14. With defined approach and retraction paths, the machining path is defined.

Additional consideration is factored into the machining path to account for a depth of cut of the abrasive disk 18. As appreciated, the abrasive disk 18 removes material on the rotor surface 16 and therefore the contact points 22 will be disposed at a level indicative of a depth of cut along the rotor surface 16. The depth below the starting surface is factored into the determination of acceptable disk orientations.

A desired feed rate of the abrasive disk 18 is determined and included with the determined mapped machining path for generation of machine executable instructions. As appreciated, movements of the abrasive disk 18 for machining the rotor surface 16 are executed by a machine tool. A numerically controlled machine tool requires instructions in a standard format. The information determined concerning the machining path and any other machine parameter are therefore input in a format recognized and useful in generating executable instructions for a numerically controlled machine.

The disclosed process has been described as it relates to the physical interaction with the abrasive disk 18 and the rotor 10. This example process can be accomplished as a computer-implemented method utilizing computer generated solid models indicative of the rotor 10 and the corresponding abrasive disk 18.

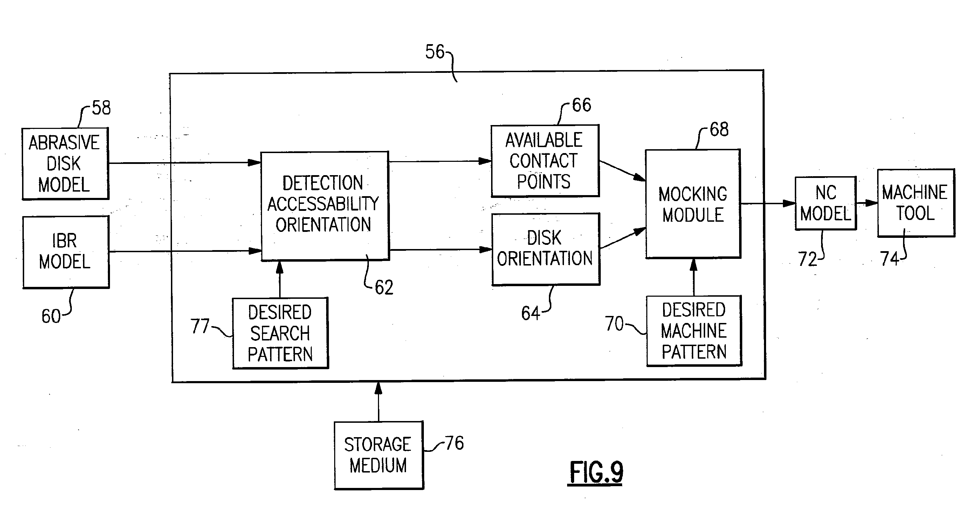

Referring to Figure 9, a computer system 56 is schematically shown and executes the disclosed process with a computer generated model 58 of the example abrasive disk 58 and a computer generated model of the IBR rotor 60. The computer system 56 is directed to detect an accessible rotor surface area and corresponding accessible abrasive disk orientations as schematically indicated at 62. The instructions and process indicated at 62 provide for orientating the model 58 at successive contact points 22 on the rotor surface 16 represented by the model 60 indicative of the rotor 10. A desired search pattern as indicated at 77 is provided as an input for the detection of accessible disk orientations. The desires search pattern 77 can include adaptive parameters that set out spacing and increments between contact points 22 and disk orientations. The computing system 56 is utilized to orientate the corresponding models to obtain the information indicative of a relative position between the rotor 10 and the abrasive disk 18.

An intermediate output from the instructions and process indicated at 62 include a set of accessible contact points on the rotor surface indicated at 66 and a set of acceptable disk orientations indicated at 64 at each of the contact points. This information is input into a machining module 68 that includes another set of instructions that maps a machining path along the rotor surface 16. The module 68 receives the additional input of a desired machining path as indicated at 70. As described above, the machining path 70 can include any known machining pattern as is desired. The selected machining path is tailored to specific applications and rotor configurations.

The output from the module 68 is a set of instructions 72 that can be utilized to generate machine tool executable instructions. The example instructions are in the form of a high level output that is converted using a postprocessor into a specific Numerical Control (NC) format utilized by the machine tool. Numerical Control instructions can be provided in various formats, for example RS274d and ISO6983 formats along with any other NC control machine executable instructions. The examples set of instructions 72 are thereby usable to generate specific machine tool executable instructions that direct the actions of a NC machine tool 74. The example NC machine tool 74 provides for movement of the abrasive disk 18 to machine the rotor surface 16. It should be understood that the format and characteristics of the instructions 72 generated by the computer system can be in any format desired that corresponds with the machine tool utilized for controlling movement and machining with the example abrasive disk 18.

It should also be noted that the computing system 56 used to implement various functionality, such as that attributable to the manipulation of solid models and the data and instructions generated indicative of a relative orientation of the abrasive disk 18 relative to the rotor 10 can be of any known configuration. In terms of hardware architecture, the computing system 56 can include a processor, a memory, and one or more input and/or output (I/O) device interface(s) that are communicatively coupled via a local interface. The local interface can include, for example but not limited to, one or more buses and/or other wired or wireless connections. The local interface may have additional elements, which are omitted for simplicity, such as controllers, buffers (caches), drivers, repeaters, and receivers to enable communications. Further, the local interface may include address, control, and/or data connections to enable appropriate communications among the aforementioned components.

The processor may be a hardware device for executing software, particularly software stored in memory or any other storage medium 76 that includes instructions directing the computer system 56 to perform the disclosed process. The processor can be a custom made or commercially available processor, a central processing unit (CPU), an auxiliary processor among several processors associated with the computing device, a semiconductor based microprocessor (in the form of a microchip or chip set) or generally any device for executing software instructions.

The memory can include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). Moreover, the memory may incorporate electronic, magnetic, optical, and/or other types of storage media. Note that the memory can also have a distributed architecture, where various components are situated remotely from one another, but can be accessed by the processor.

The software in the memory may include one or more separate programs, each of which includes an ordered listing of executable instructions for implementing logical functions. A system component embodied as software may also be construed as a source program, executable program (object code), script, or any other entity comprising a set of instructions to be performed. When constructed as a source program, the program is translated via a compiler, assembler, interpreter, or the like, which may or may not be included within the memory.

The Input/Output devices that may be coupled to system I/O Interface(s) may include input devices, for example but not limited to, a keyboard, mouse, scanner, microphone, camera, proximity device, etc. Further, the Input/Output devices may also include output devices, for example but not limited to, a printer, display, etc. Finally, the Input/Output devices may further include devices that communicate both as inputs and outputs, for instance but not limited to, a modulator/demodulator (modem; for accessing another device, system, or network), a radio frequency (RF) or other transceiver, a telephonic interface, a bridge, a router, etc.

When the computing system 56 is in operation, the processor can be configured to execute software stored within the memory, to communicate data to and from the memory, and to generally control operations of the computing system 56 pursuant to the software. Software in memory, in whole or in part, is read by the processor, perhaps buffered within the processor, and then executed.

It should be appreciated that it is within the contemplation of this disclosure that any computer aided modeling method, software and device could be utilized to construct and orientate the models in relative position to each other and to gather data indicative of the acceptable range of movements about the roll and yaw axis.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A method of machining a rotor (10) having a disk (12) and a plurality of integral airfoils (14) projecting outwardly from the disk surface, the method comprising the steps of:
detecting a range of acceptable orientations of an abrasive disk (18) in contact with a fixed position on a rotor surface (16) between two airfoils (14);
mapping a pattern of machining points on the rotor surface (16); and
removing material from the rotor surface by moving the abrasive disk (18) along the mapped pattern of machining points and orientating the abrasive disk (18) along the mapped pattern within the detected range of acceptable orientations.

2. The method as recited in claim 1, including the step of placing the abrasive disk (18) into contact with the rotor surface (16) and incrementally moving the abrasive disk (18) while maintaining contact with the rotor surface (16) about at least one axis until such movement would result in contact between the abrasive disk (18) and one of the two airfoils (14).

3. The method as recited in claim 2, including the step of moving the abrasive disk (18) to another fixed position between the two airfoils (14) and determining a range of acceptable orientations of the abrasive disk (18) at each new fixed position.

4. The method as recited in claim 2 or 3, wherein the at least one axis comprises a roll axis (28) where the abrasive disk (18) moves away from a normal axis, and a yaw axis (42) where the abrasive disk (18) is twisted about a contact point (22) on the rotor surface (16).

5. The method as recited in any preceding claim, including the step of detecting acceptable orientations at locations closest to each of the airfoils (14).

6. The method as recited in claim 5, including the step of determining a range of acceptable approach paths between the two airfoils (14) in view of the detected acceptable orientations of the abrasive disk (18) on the rotor surface (16).

7. The method as recited in any preceding claim, including the step of generating a set of machine executable instructions for removing material along the mapped pattern in view of the detected acceptable orientations of the abrasive disk (18) and the determined range of acceptable approach paths between the two airfoils (14).

8. The method as recited in any preceding claim, including the step of determining a desired machining orientation of the abrasive disk (18) by determining the one acceptable orientation within the range of acceptable orientations that spaces the abrasive disk (18) furthest away from each of the two airfoils (14).

9. The method as recited in any preceding claim, wherein the mapped pattern comprises one of a zig-zag machining pattern and a zig pattern.

10. A computer implemented method of generating machine executable instructions for machining a rotor surface (16) comprising the steps of:
detecting a range of acceptable orientations of an abrasive disk (18) in contact with a fixed position on a rotor surface (16) between two airfoils (14);
mapping a pattern of machining points on the rotor surface (16); and
generating commands for instructing movement of the abrasive disk (18) for removing material from the rotor surface (16) by moving the abrasive disk (18) along the mapped pattern of machining points and orientating the abrasive disk (18) along the mapped pattern within the detected range of acceptable orientations.

11. The method as recited in claim 10, including the step of defining a model indicative of a shape of the abrasive disk (18) and of the rotor (10) and positioning the model of the abrasive disk (18) relative to the model of the rotor surface (16) at a plurality of positions between the two airfoils (14), and optionally including the step of detecting the range of acceptable orientations of the abrasive disk (18) for each of the plurality of positions between the two airfoils (14) to define an accessible rotor surface area between the two airfoils (14).

12. The method as recited in claim 11, including the step of defining the pattern of machining points on the rotor surface (16) including orientations of the abrasive disk (18) between the two airfoils (14).

13. The method as recited in claim 11 or 12, including the step of defining an approach path within the detected range of acceptable abrasive disk orientations.

14. The method as recited in claim 11, 12 or 13, including the step of defining the pattern of machining points on the rotor surface (16) including smooth transition movements between each of the machining points.

15. A computer readable storage medium including computer executable instructions for generating machine executable instructions for machining a rotor surface (16) comprising:
a first set of instructions directing the computer to detect a range of acceptable orientations of an abrasive disk (18) in contact with a fixed position on a rotor surface (16) between two airfoils (14);
a second set of instructions directing the computer to map a pattern of machining points on the rotor surface (16); and
a third set of instructions generating commands executable by a machine for removing material from the rotor surface (16) by moving a rotating abrasive disk (18) along the mapped pattern of machining points and orientating the abrasive disk (18) along the mapped pattern within the detected range of acceptable orientations;
the storage medium optionally including instructions directing the computer to define a model indicative of a shape of the abrasive disk (18) and of the rotor (10) and directing positioning the model of the abrasive disk (18) relative to the model of the rotor surface at a plurality of positions between two airfoils; and/or
wherein the first set of instructions for example includes instructions directing the computer to detect the range of acceptable orientations of the abrasive disk for each of the plurality of positions between the two airfoils to define an accessible rotor surface area between the two airfoils; and/or
wherein the second set of instructions for example includes instructions directing the computer to define the pattern of machining points on the rotor surface (16) to include orientations of the abrasive disk (15) between the two airfoils; and/or
including instructions directing the computer to define approach and retraction paths of the abrasive disk (18) within the detected range of acceptable abrasive disk orientations.
